# EUROPÄISCHE PATENTANMELDUNG

(11) **EP 1 696 145 A2**
(43) Veröffentlichungstag der Anmeldung: **30.08.2006**
(21) Anmeldenummer: 05025955.5
(22) Anmeldetag: 29.11.2005
(51) Int. Cl.: F16D 3/84

(54) **Kupplung zum Verbinden zweier Bauteile**

(30) Priorität: 24.02.2005 DE 102005008920
(71) Anmelder: Wittenstein AG, 97999 Igersheim (DE)
(72) Erfinder: Bayer, Thomas, 97999 Igersheim (DE)
(74) Vertreter: Weiss, Peter

(57) **Zusammenfassung**

Bei einer Kupplung zum Verbinden zweier Bauteile, wie Antriebselement mit einem Abtriebselement, Getriebe od. dgl., mit einer Klemmnabe (1) und einer Zentriernabe (2), die über zumindest einen Balg (5) miteinander axial verschiebbar verbunden sind, soll als zusätzliche Verdrehsicherung Klemmnabe (1) und Zentriernabe (2) formschlüssig und radial verdrehfest miteinander in Verbindung stehen.

## Beschreibung

Die vorliegende Erfindung betrifft eine Kupplung zum Verbinden zweier Bauteile, wie Antriebselement mit einem Abtriebselement, Getriebe od. dgl., mit einer Klemmnabe und einer Zentriernabe, die über zumindest einen Balg miteinander axial verschiebbar verbunden sind.

Derartige Kupplungen sind bereits in vielfältiger Form und Ausführung im Markt bekannt und erhältlich. Meist sind sie als drehstarre Ausgleichskupplungen bekannt, um einleitende Momente von einem Bauteil auf ein zweites Bauteil zu übertragen. Die Kupplung schliesst meist an eine Klemmnabe, ein Antriebselement, wie beispielsweise einen Elektromotor, Servomotor od. dgl. an und überträgt ein Drehmoment über eine Zentriernabe auf ein beliebiges Getriebe. Nachteilig bei derartigen Kupplungen ist, dass diese einem Verschleiss unterliegen, thermischen Belastungen des Antriebselementes ausgesetzt sind und entsprechende Dehnungen von Abtriebswelle des Antriebselementes kompensieren müssten. Dabei ist häufig die Präzision von Antriebselementen nicht hinreichend ausgeführt, so dass entsprechende Schwankungen des Antriebselementes hinsichtlich Spiel, Schwingungen, thermischen Dehnungen über die Kupplung ausgeglichen bzw. aufgenommen oder aufgefangen werden müssen.

Dies führt dazu, dass herkömmliche Kupplungen, vorzugsweise Kupplungen bestehend aus Klemmnabe und Zentriernabe, die miteinander über einen Balg bzw. einen einfachen oder mehrfachen Faltenbalg verbunden sind, einem gewissen Verschleiss bei zu hoher Belastung, insbesondere axialer Belastung unterliegen und hierdurch die Kupplung bei Brechen des Faltenbalges ihre Wirkung verliert.

Zudem sollen Schwingungen des Antriebselementes, Unwuchten od. dgl. nicht mit auf das anschliessende Getriebeelement übertragen werden, sondern von der Kupplung aufgefangen werden. Ferner soll ein spielfreies Übertragen des Drehmomentes von Antriebselement über die Klemmnabe auf die Zentriernabe und damit eine spielfreie Einleitung eines grossen Drehmomentes in ein Getriebeelement möglich sein.

Der vorliegenden Erfindung liegt die Aufgabe zugrunde, eine Kupplung der eingangs genannten Art zu schaffen, welche die genannten Nachteile beseitigt und mit welcher auf sehr einfache, kostengünstige und effektive Weise spielfrei und absolut präzise ein Drehmoment sicher übertragen werden kann. Zudem soll die Lebensdauer einer Kupplung erheblich gesteigert werden können und bei einem Defekt des Balges, insbesondere des Faltenbalges als Verbindungselement zwischen Klemmnabe und Zentriernabe dennoch eine Übertragung eines Drehmomentes möglich sein.

Zur Lösung dieser Aufgabe führen die Merkmale des Kennzeichens des Patentanspruches 1 sowie die Merkmale des nebengeordneten Patentanspruches 2.

Bei der vorliegenden Erfindung hat sich als besonders vorteilhaft erwiesen, dass zum Ausgleich eines lateralen Versatz der Klemmnabe und/oder Zentriernabe ein Vorsprung stirnseitig anschliesst, der in eine entsprechende passgenaue Ausnehmung oder einen entsprechenden Vorsprung der Zentriernabe eingreift. Dabei sind radial und vorzugsweise umlaufend Klemmnabe und Zentriernabe über zumindest einen Balg, Faltenbalg miteinander fest verbunden, so dass eine axiale Bewegung zwischen Klemmnabe und Zentriernabe gewährleistet ist und verdrehfest und spielfrei ein Drehmoment von Klemmnabe auf die Zentriernabe übertragen werden kann. An die Klemmnabe schliesst beispielsweise eine Welle eines beliebigen Antriebselementes, Elektromotors, Servomotors od. dgl. an. Damit permanent ein radialer Versatz gewährleistet ist, und ein axiales Bewegen zwischen Klemmnabe und Zentriernabe noch gewährleistet ist, greift der Vorsprung, der stirnseitig an die Klemmnabe anschliesst, mit geringem Spiel in eine entsprechend passgenaue Ausnehmung der Zentriernabe, stirnseitig ein.

Zur Zentrierung von Klemmnabe gegenüber Zentriernabe hat sich als vorteilhaft erwiesen, in eine vorzugsweise radial umlaufende Nut ein O-Ring einzusetzen, der ein laterales Zentrieren der beiden Bauteile gegeneinander gewährleistet.

Bricht nun infolge Alterung oder Überbelastung beispielsweise der Balg bzw. Faltenbalg, der auch radial nach aussen oder radial nach innen gerichtet, stirnseitig die Klemmnabe und Zentriernabe zur Kupplung verbinden kann, so hat es sich bei der vorliegenden Erfindung als besonders vorteilhaft erwiesen, den Vorsprung von Klemmnabe oder Zentriernabe als Mehreckprofil, Ellipse Polygonprofil od. dgl. auszubilden, welcher dann entsprechend passgenau und fluchtend in eine entsprechend ausgebildete bzw. profilierte Ausnehmung von Zentriernabe oder Klemmnabe eingreift.

Bricht der Faltenbalg, so wird als redundantes System gewährleistet, dass dennoch ein Drehmoment von Klemmnabe auf Zentriernabe durch die radiale Verdrehsicherung übertragen werden kann. Eine sogenannte "fail save"-Funktion entsteht.

Die radiale Verdrehsicherung der formschlüssig ineinander greifenden Teile kann unterschiedlich gelöst werden. Hierzu kann der Vorsprung, der stirnseitig, vorzugsweise von der Klemmnabe abragt, elliptisch ausgebildet sein und entsprechend in eine elliptische Ausnehmung der Zentriernabe formschlüssig eingreifen. Hierdurch wird ebenfalls eine Verdrehsicherung bzw. ein sogenanntes radiales Mitnehmersystem geschaffen.

Eine weitere Ausführungsform ist, dass der Vorsprung von Klemmnabe als exzentrisch zur Mittelachse ausgebildeter Vorsprung ausgebildet ist, welche dann entsprechend in eine exzentrisch ausgebildete fluchtende Ausnehmung der Zentriernabe in etwa passgenau eingreift und hierdurch eine radiale Verdrehsicherung bzw. ein radiales Mitnehmersystem gebildet ist, sollte der Balg, insbesondere Faltenbalg brechen.

Eine andere Möglichkeit ist, dass beispielsweise entsprechende Zapfenelemente, Zylinderstifte, Passstifte, als Vorsprünge von der Klemmnabe stirnseitig abragen, die in entsprechend passgenaue Ausnehmungen, ausgebildete als Sacklöcher, Öffnungen od. dgl. der Zentriernabe stirnseitig eingreifen und hierdurch ebenfalls eine radiale Verdrehsicherung bzw. ein radiales Mitnehmersystem als redundantes System mit "fail save"-Funktion schaffen. Dabei sollen auch andere Formen von Vorsprüngen, wie z.B. zapfenartige, kreissegmentartige im Rahmen der Erfindung liegen, um eine entsprechende radiale Sicherung zu schaffen.

Zudem hat sich als vorteilhaft erwiesen, dem Balg, insbesondere Faltenbalg und/oder einer Verbindungsstelle zwischen Klemmnabe und Zentriernabe zumindest ein Sensorelement zuzuordnen, welches den formschlüssigen Eingriff von Vorsprung zur Ausnehmung per Kraftschluss detektiert und/oder detektiert, wenn der Balg bzw. Faltenbalg defekt oder gebrochen ist. Dieser detektiert einen Bruch der Faltenbalgkupplung, so dass dann detektiert wird, dass formschlüssig als radiales Mitnehmersystem das Drehmoment über den Vorsprung der Klemmnabe über die Ausnehmung zur Zentriernabe erfolgt. Dann kann beispielsweise bei der nächsten Inspektion, beim nächsten Wartungsintervall od. dgl. ein entsprechender Austausch oder eine Reparatur der Kupplung bzw. des Balges erfolgen. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Längsschnitt durch ein Getriebe mit integrierter bzw. eingesetzter Kupplung, bestehend aus Klemmnabe und Zentriernabe;
Figur 2a einen schematisch dargestellten Längsschnitt durch die Kupplung, bestehend aus Klemmnabe und Zentriernabe, verbunden über einen Balg, insbesondere Faltenbalg;
Figur 2b einen schematisch dargestellten vergrösserten Teillängsschnitt durch einen Verbindungsbereich zwischen Klemmnabe und Zentriernabe;
Figur 3 perspektivische Ansichten einer weiteren Kupplung, bestehend aus Klemmnabe und Zentriernabe;
Figur 4 ein noch weiteres Ausführungsbeispiel in perspektivischer Ansicht einer Kupplung bestehend aus Klemmnabe und Zentriernabe;
Figuren 5a und 5b zeigen zwei weitere Ausführungsbeispiele von Klemmnabe und Zentriernabe mit entsprechender radialer verdrehsicherung;

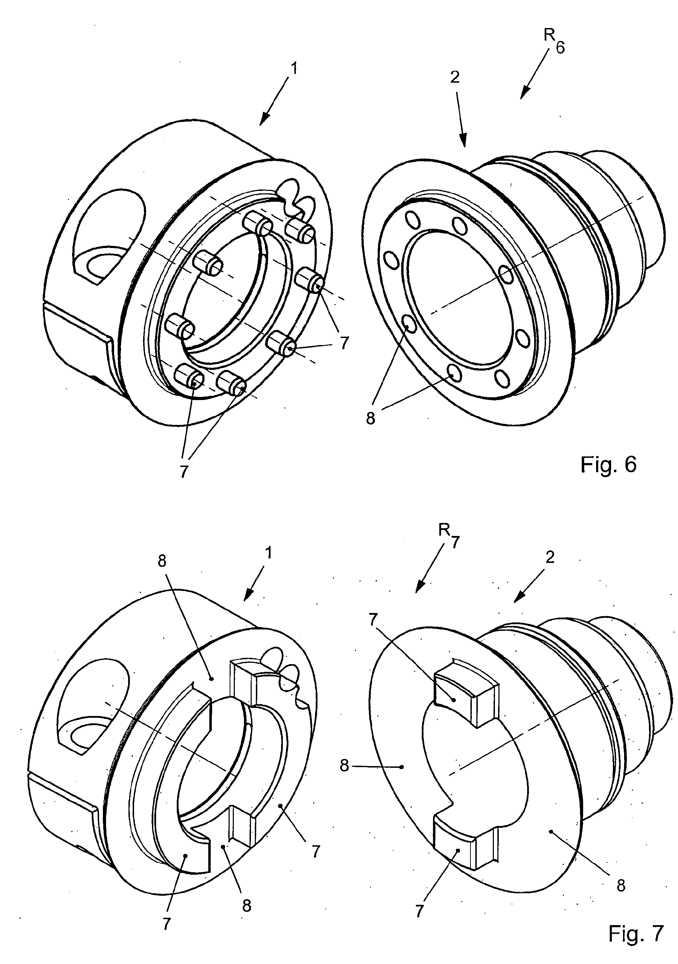

Figuren 6 und 7 zeigen schematisch dargestellte perspektivische Ansichten weitere Ausführungsbeispiele von weiteren Kupplungen, bestehend aus Klemmnabe und Zentriernabe.

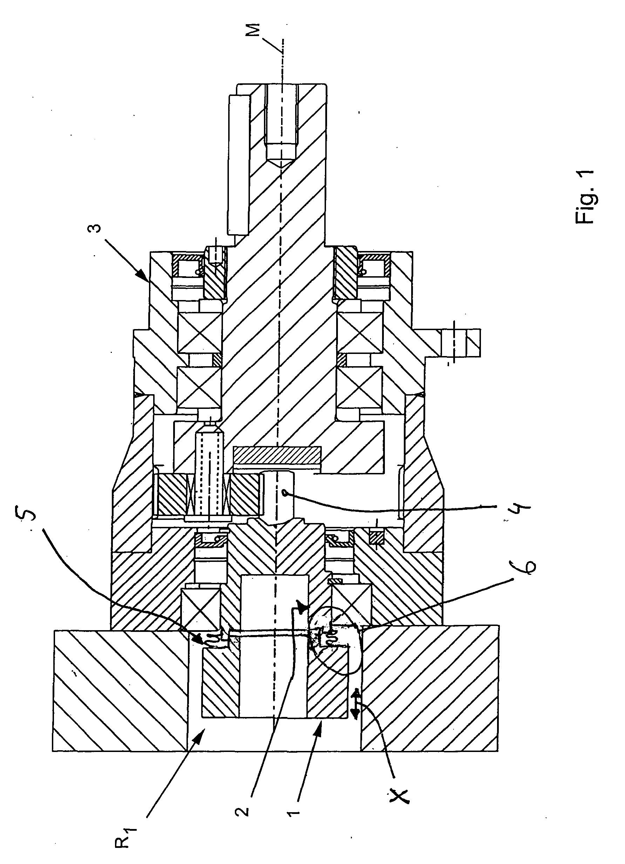

Gemäss Figur 1 wird eine erfindungsgemässe Kupplung R₁, bestehend aus einer Klemmnabe 1 als Verbindungselement in einem hier nicht näher dargestellten Antrieb, Elektromotor, Servomotor od. dgl. und einem Getriebeelement 3 eingesetzt.

Dabei dient die Zentriernabe 2 zum passgenauen Einsetzen in das Getriebeelement 1 und Übertragen des Drehmomentes auf ein Stirnrad 4 des Getriebes 3.

Zum Ausgleich von axialen Dehnungen, insbesondere bei Erwärmung des Antriebselementes ist die Klemmnabe 1 geringfügig gegenüber der Zentriernabe 2 in dargestellter Doppelpfeilrichtung X axial entlang der Mittelachse M verschiebbar gelagert.

Dabei wird das Drehmoment eines beliebigen Antriebes über die Klemmnabe 1 über einen Balg 5, insbesondere Faltenbalg 6 auf die Zentriernabe 2 übertragen. Dabei gewährleistet der Balg 5, insbesondere Faltenbalg 6, welcher eine radiale Zentrierung zwischen Klemmnabe 1 und Zentriernabe 2 herstellt, dass das Drehmoment bei axialem möglichen Ausgleich auf die Zentriernabe 2, insbesondere das Stirnrad 4 des Getriebeelementes 3 übertragbar ist.

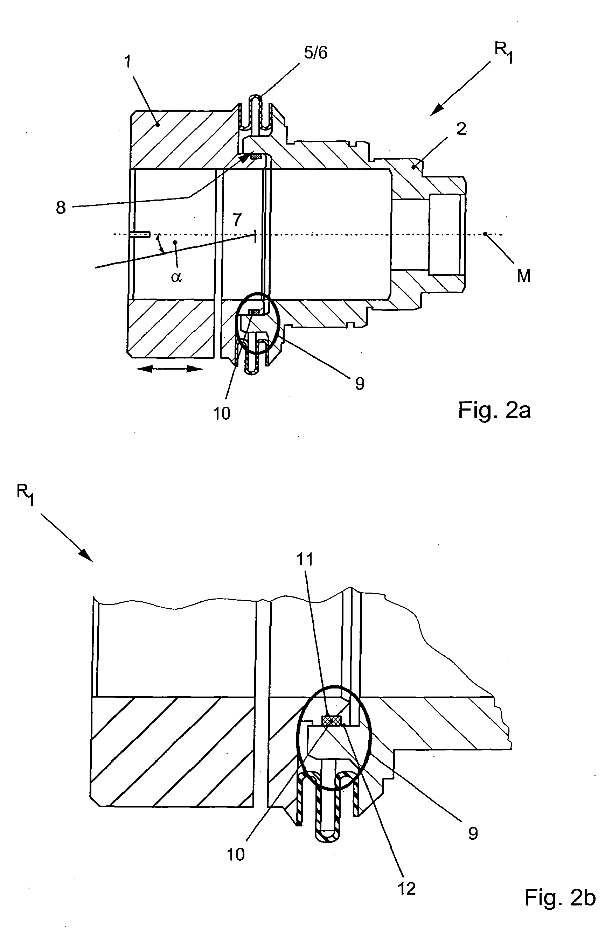

Die Kupplung R₁ ist in einem vergrösserten Längsschnitt in Figur 2a dargestellt. Dabei weist in einem stirnseitigen Bereich, im Bereich des Balges 5 bzw. Faltenbalges 6 die Klammnabe 1 ausserhalb einer Einstecköffnung einen flanschartigen Vorsprung 7 auf, der in eine entsprechende Ausnehmung 8 der Zentriernabe 2 eingreift.

Ferner ist auch der umgekehrte Fall denkbar, dass ein entsprechender und hier nicht dargestellter oder bezifferter Vorsprung der Zentriernabe 2 in eine entsprechende passende Ausnehmung der Klemmnabe 1 eingreift, um einen radialen Versatz von Klemmnabe zu Zentriernabe gegenüber der Mittelachse M zu verhindern.

Bei der vorliegenden Erfindung hat sich als vorteilhaft erwiesen, im Bereich einer Verbindungsstelle 9 zwischen Klemmnabe 1 und Zentriernabe 2 einen O-Ring 10 einzusetzen, der eine radiale Zentrierung zwischen Klemmnabe 1 und Zentriernabe 2 gewährleistet.

Dabei kann beispielsweise der O-Ring 10 in eine zumindest radial umlaufende Nut 11 des Vorsprunges 7 eingesetzt sein.

Es ist jedoch auch denkbar, die Nut 11 innen in der Ausnehmung 8 der Zentriernabe 2 vorzusehen, um den O-Ring 10 dort einzusetzen. Hierauf sei die Erfindung nicht beschränkt.

Damit ein geringes angulares Verschwenken oder Bewegen von Zentriernabe 1 zur starren, im Getriebeelement 3 fest eingesetzten Zentriernabe 2 möglich ist, hat sich als vorteilhaft erwiesen, mit einem geringfügigen Spiel die Klemmnabe 1 mit Zentriernabe 2 über Vorsprung 7 und Ausnehmung 8 zu verbinden, wobei eine äussere Oberfläche 12 des Vorsprunges 7 im Bereich der Nut 11 ballig gewölbt sein kann, wie es insbesondere in Figur 2b vergrössert als Teillängsschnitt dargestellt ist.

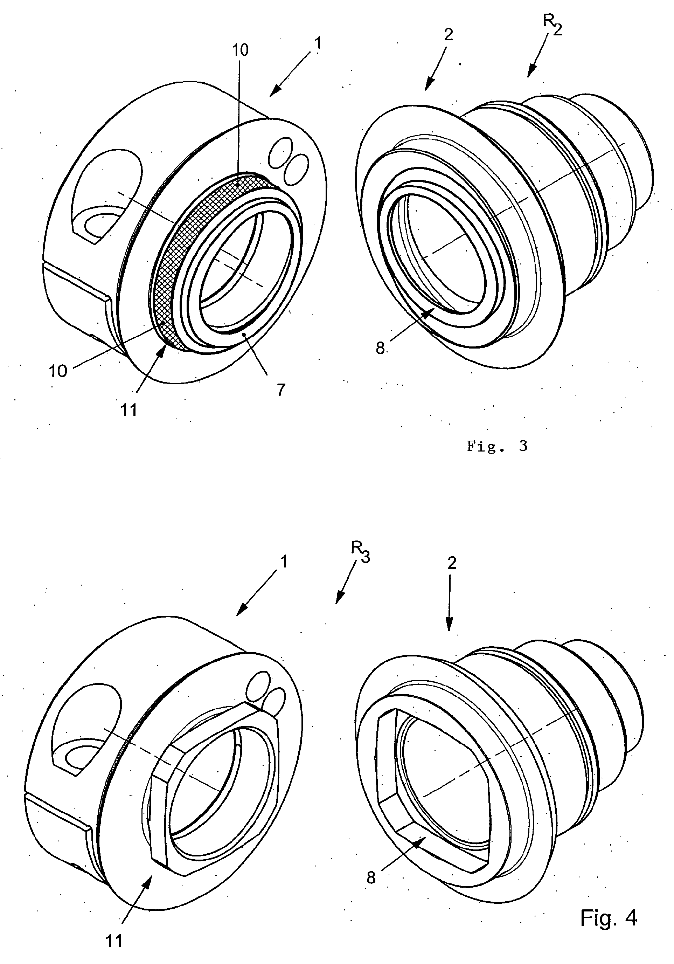

Eine entsprechende perspektivische Ansicht einer ähnlichen Kupplung R₂ ist in Figur 3 aufgezeigt, wobei Klemmnabe 1 und Zentriernabe 2 perspektivisch dargestellt sind. Der Balg 5 bzw. Faltenbalg 6 wird nach Zusammenfügen bzw. formschlüssigen Verbinden von Klemmnabe 1 und Zentriernabe 2 aus einem Mantelbereich zwischen Klemmnabe 1 und Zentriernabe 2 mit diesem fest verbunden, insbesondere verschweisst.

In Figur 3 ist durch die perspektivische Darstellung erkennbar, dass im stirnseitigen Bereich der Klemmnabe 1 der Vorsprung 7 mit der Nut 11 und eingesetztem O-Ring 10 hervorragt, welcher passgenau und fluchtend formschlüssig in die entsprechende Ausnehmung 8 der Zentriernabe 2 beim Zusammenfügen eingreift.

Es hat sich bei der vorliegenden Erfindung ferner als vorteilhaft erwiesen, wie es bei einer Kupplung R₃ aufgezeigt ist, dass zusätzlich zum formschlüssigen Verbinden zwischen Klemmnabe 1 und Zentriernabe 2 der Vorsprung 7 polygonartig als vieleckartiges, als viereckartiges Profil ausgebildet ist, welches beim Zusammenfügen von Klemmnabe 1 in die Zentriernabe 2 in eine entsprechend ausgebildete Ausnehmung 8 der Zentriernabe 2 eingreift. Hierdurch wird in oben beschriebener Weise der radiale Versatz gesichert und gleichzeitig wird eine formschlüssige Verbindung zum Übertragen eines Drehmomentes von Klemmnabe 1 zur Zentriernabe 2 geschaffen.

Über den Vorsprung 7 und die entsprechend passgenaue Ausnehmung 8 ist eine zusätzliche Verdrehsicherung der Klemmnabe 1 gegenüber Zentriernabe 2 in radialer Hinsicht gewährleistet. Fällt beispielsweise der hier nicht näher dargestellte Balg 5 bzw. Faltenbalg 6 aus bzw. reisst dieser ab, durch beispielsweise eine Überbelastung, so überträgt der entsprechend profiliert ausgebildete Vorsprung 7 das Drehmoment über die Ausnehmung 8 auf die Zentriernabe. Dann wird über die formschlüssige Verbindung das Drehmoment in das Getriebeelement 3 eingeleitet. Ein redundantes System mit einer sogenannten "fail save"-Funktion entsteht hierdurch. Somit dient die formschlüssige Verbindung als radiale Verdrehsicherung, beispielsweise bei Bruch oder Effekt des Balges 5, insbesondere des Faltenbalges 6.

In dem Ausführungsbeispiel gemäss Figur 5a ist eine Kupplung R₄ dargestellt, die in oben beschriebener Weise auch mit hier nicht näher dargestellten Balg 5 bzw. Faltenbalg 6 gebildet ist, wobei Klemmnabe 1 und Zentriernabe 2 in etwa der eingangs genannten Art gebildet sind. Dort hat sich als besonders vorteilhaft erwiesen, dass als redundante zusätzliche Verdrehsicherung der Vorsprung 7 elliptisch ausgebildet ist, welcher in eine entsprechend passgenau elliptisch ausgebildete Ausnehmung 8 in die Zenteriernabe 2 passgenau eingreift. Bricht beispielsweise die hier nicht näher dargestellte Verbindung bzw. der Balg 5 zwischen Klemmnabe 1 und Zentriernabe 2, so kann das Drehmoment noch von Klemmnabe 1 über den elliptisch ausgebildeten Vorsprung liegen, durch formschlüssiges Eingreifen in die entsprechend elliptisch ausgebildete Ausnehmung 8 der Zentriernabe 2 dennoch übertragen werden.

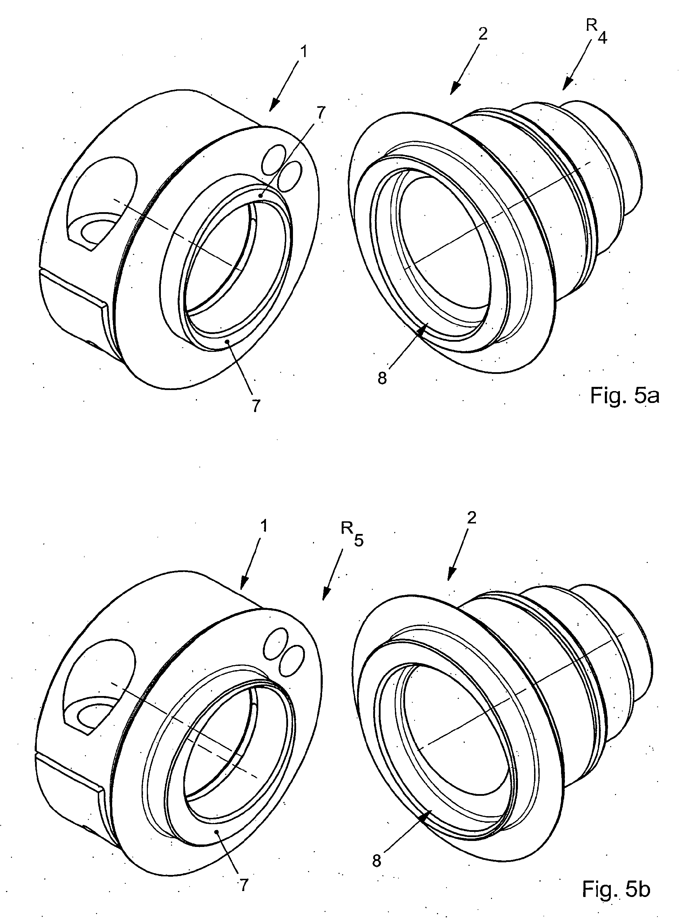

Anstelle der elliptischen Form des Vorsprunges 7 bzw. Ausnehmung 8 ist auch eine exzentrische Form bzw. Anordnung in Bezug auf die Mittelachse M von Klemmnabe 1 und Zentriernabe 2 möglich, wie es in dem Ausführungsbeispiel einer Kupplung R₅ gemäss Figur 5b dargestellt ist.

Auch ist denkbar, wie es im Ausführungsbeispiel einer Kupplung R₆ dargestellt ist, dass entsprechende, als Zapfenelemente ausgebildete Vorsprünge 7 in entsprechende Ausnehmungen 8, ausgebildet als Sacklöcher od. dgl. eingreifen, um eine zusätzliche radiale Verdrehsicherung herzustellen. Gleichzeitig wird hierdurch ebenfalls gewährleistet, dass ein geringes axiales Bewegen durch den hier nicht näher dargestellten Balg 5 gewährleistet bleibt.

Zusätzlich dienen die jeweiligen Vorsprünge 7 bzw. Zapfenelement der radialen redundanten Verdrehsicherung.

Anstelle von Zapfenelemente als Vorsprünge 7 können auch entsprechende beliebig ausgeformte Vorsprünge 7 mit entsprechend etwa formschlüssig passenden Ausnehmungen 8 stirnseitig zwischen Klemmnabe 1 und Zentriernabe 2 zur Herstellung einer radialen Verdrehsicherung, wie es in Figur 7 bei einer Kupplung R₇ angedeutet ist, vorgesehen sein. Hierauf sei die Erfindung nicht beschränkt.

### Bezugszeichenliste

| | | | | | |
|---|---|---|---|---|---|
| 1 | Klemmnabe | 34 | | 67 | |
| 2 | Zentriernabe | 35 | | 68 | |
| 3 | Getriebeelement | 36 | | 69 | |
| 4 | Stirnrad | 37 | | 70 | |
| 5 | Balg | 38 | | 71 | |
| 6 | Faltenbalg | 39 | | 72 | |
| 7 | Vorsprung | 40 | | 73 | |
| 8 | Ausnehmung | 41 | | 74 | |
| 9 | Verbindungsstelle | 42 | | 75 | |
| 10 | O-Ring | 43 | | 76 | |
| 11 | Nut | 44 | | 77 | |
| 12 | Oberfläche | 45 | | 78 | |
| 13 | | 46 | | 79 | |
| 14 | | 47 | | R₁-R₆ | Kupplung |
| 15 | | 48 | | | |
| 16 | | 49 | | | |
| 17 | | 50 | | X | Doppelpfeilrichtung |
| 18 | | 51 | | | |
| 19 | | 52 | | M | Mittelachse |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kupplung zum Verbinden zweier Bauteile, wie Antriebselement mit einem Abtriebselement, Getriebe od. dgl., mit einer Klemmnabe (1) und einer Zentriernabe (2), die über zumindest einen Balg (5) miteinander axial verschiebbar verbunden sind,
**dadurch gekennzeichnet,**
**dass** als zusätzliche Verdrehsicherung Klemmnabe (1) und Zentriernabe (2) formschlüssig und radial verdrehfest miteinander in Verbindung stehen.

2. Kupplung zum Verbinden zweier Bauteile, wie Antriebselement mit einem Abtriebselement, Getriebe od. dgl., mit einer Klemmnabe (1) und einer Zentriernabe (2), die über zumindest einen Balg (5) miteinander axial verschiebbar verbunden sind, **dadurch gekennzeichnet, dass** als zusätzliche radiale Lagerung Klemmenabe (1) und Zentriernabe (2) formschlüssig ineinander greifen, wobei zwischen Klemmnabe (1) und Zentriernabe (2) oder Zentriernabe (2) und Klemmnabe (1) als zusätzliche radiale Lagerung zumindest ein O-Ring (10) zur Sicherung gegen lageralen Versatz eingesetzt ist.

3. Kupplung nach Anspruch 1 oder 2, **dadurch gekennzeichnet, dass** Klemmnabe (1) und Zentriernabe (2) über zumindest einen Balg (5), insbesondere über eine Faltenbalgkupplung fest miteinander in Verbindung stehen und Klemmnabe (1) sowie Zentriernabe (2) radial starr miteinander verbunden sind.

4. Kupplung nach wenigstens einem der Ansprüche 1 bis 3, **dadurch gekennzeichnet, dass** die Klemmnabe (1) und Zentriernabe (2) formschlüssig über zumindest einen Vorsprung der Klemmnabe (1) in eine Ausnehmung (8) der Zentriernabe (2) oder ein Vorsprung der Zentriernabe (2) in eine Ausnehmung (8) der Klemmnabe (1) eingreift.

5. Kupplung nach Anspruch 4, **dadurch gekennzeichnet, dass** der Vorsprung (7) von Zentriernabe (2) und/oder Klemmnabe (1) als Zapfenelement oder als Flanschvorsprung ausgebildet ist.

6. Kupplung nach Anspruch 4 oder 5, **dadurch gekennzeichnet, dass** die Ausnehmung (8) radial fluchtend mit dem Vorsprung (7) der Klemmnabe (1) oder Zentriernabe (2) vorgesehen ist und als Sackloch oder als Schlitzausnehmung ausgebildet ist.

7. Kupplung nach wenigstens einem der Ansprüche 4 bis 6, **dadurch gekennzeichnet, dass** der Vorsprung (7) flanschartig von Zentriernabe (2) oder Klemmnabe (1) stirnseitig ausgebildet ist und in eine entsprechende passende in Klammnabe (1) oder Zentriernabe (2) vorgesehene Ausnehmung (8) in etwa passgenau und fluchtend eingreift.

8. Kupplung nach wenigstens einem der Ansprüche 1 bis 7, **dadurch gekennzeichnet, dass** der Vorsprung (7) sowie die Ausnehmung (8) exzentrisch zu einer Mittelachse (M) von Zentriernabe (2) und Klemmnabe (1), und/oder elliptisch ausgebildet sind.

9. Kupplung nach wenigstens einem der Ansprüche 4 bis 8, **dadurch gekennzeichnet, dass** der Vorsprung (4) an Klemmnabe (1) oder Zentriernabe (2), der mit der Ausnehmung (8) von Zentriernabe (2) oder Klemmnabe (1) fluchtend ineinander greift, als mehreckartiges, polygonartiges Profil, insbesondere Rechteckprofil ausgebildet ist.

10. Kupplung nach wenigstens einem der Ansprüche 1 bis 9, **dadurch gekennzeichnet, dass** in einem Vorsprung (7) von Klemmnabe (1) oder Zentriernabe (2) radialen Zentrierung zumindest eine Nut (11) vorgesehen ist, in welcher zur radialen Zentrierung des radialen Versatzes ein O-Ring (10) eingesetzt ist, wobei durch Eingreifen des Vorsprunges (7) in die entsprechend passende Ausnehmung (8) von Klemmnabe (1) oder Zentriernabe (2) die beiden Bauteile (1, 2) gegen radialen Versatz zueinander gesichert gelagert sind.

11. Kupplung nach wenigstens einem der Ansprüche 4 bis 10, **dadurch gekennzeichnet, dass** eine Oberfläche (12) des Vorsprunges (7) im Bereich der zumindest einen Nut (11) zumindest leicht ballig gewölbt ist, wobei hierdurch eine Bewegung von Zentriernabe (2) oder Klemmnabe (1) um einen Winkel (α) von etwa 0° bis 2° zu einer Mittelachse (M) ermöglicht ist.

12. Kupplung nach wenigstens einem der Ansprüche 1 bis 11, **dadurch gekennzeichnet, dass** der Verdrehsicherung, insbesondere Klemmnabe (1) und/oder Zentriernabe (2) und/oder dem Balg (5), insbesondere dem Faltenbalg (6) zumindest ein Sensorelement zugeordnet ist, um einen Bruch des Balges (5), insbesondere des Faltenbalges (6) zu detektieren oder einen Kraftschluss zwischen Klemmnabe (1) und Zentriernabe (2) im Bereich Vorsprung (7) und Ausnehmung (8) zu detektieren.

13. Kupplung nach Anspruch 12, **dadurch gekennzeichnet, dass** durch Detektieren eines Bruches, des Balges (5), insbesondere Faltenbalg (6) die mechanische Verdrehsicherung zwischen Klemmnabe (1) und Zentriernabe (2), insbesondere zwischen Vorsprung (7) und Ausnehmung (8) in Eingriff gelangt und nach Detektieren eines entsprechenden Signals über das zumindest eine Sensorelement die Kupplung (R₁ bis R₆) und/oder der Balg (5), insbesondere Faltenbalg (6) bei Bedarf austauschbar ist.
